# EUROPÄISCHE PATENTSCHRIFT

(11) **EP 3 348 167 B1**
(45) Veröffentlichungstag und Bekanntmachung des Hinweises auf die Patenterteilung: **27.03.2019**
(21) Anmeldenummer: 18152333.3
(22) Anmeldetag: 17.12.2001
(51) Int. Cl.: A46B 5/02, A46D 3/00

(54) **VERFAHREN ZUR HERSTELLUNG EINER ZAHNBÜRSTE**
METHOD FOR PRODUCING A TOOTH BRUSH
PROCÉDÉ DE FABRICATION D'UNE BROSSE À DENTS

(30) Priorität: 28.12.2000 DE 10065517
(43) Veröffentlichungstag der Anmeldung: 18.07.2018
(62) Teilanmeldung aus: 14001512.4
(73) Patentinhaber: Trisa Holding AG, 6234 Triengen (CH)
(72) Erfinder: Strähler, Reto, 6043 Adligenswil (CH)
(74) Vertreter: Schaad, Balass, Menzl & Partner AG

(56) Entgegenhaltungen:
- EP-A- 0 678 368
- EP-A- 0 893 225
- WO-A-99/01055
- DE-U- 9 402 418

## Beschreibung

Die Erfindung betrifft ein Verfahren zur Herstellung einer Zahnbürste gemäss dem Oberbegriff des Anspruches 1.

Aus der WO-A-94/05183 ist ein Verfahren zur Herstellung einer aus zwei verschiedenen Materialkomponeneten bestehenden Zahnbürste bekannt, bei dem in einem ersten Schritt der Grundkörper der Zahnbürste aus einer ersten Materialkomponente gespritzt wird, wozu eine erste Kavität vorgesehen ist. Danach wird in einer zweiten Kavität an verschiedenen Stellen des Grundkörpers eine weitere Materialkomponente, beispielsweise ein elastisches und/oder rutschsicheres Material, angespritzt. Der Grundkörper weist sowohl in seinem borstentragenden Bereich als auch in seinem Handgriffbereich einen relativ schmalen Querschnitt auf.

Um die Griffigkeit von Zahnbürsten zu verbessern und eine bequeme Handhabung zu ermöglichen, ist es von Vorteil, die Zahnbürste in ihrem Handgriffbereich relativ massiv auszubilden, d.h. dem Handgriff einen relativ grossen Querschnitt zu erteilen. Eine derartige Handgriff-Ausbildung bringt jedoch herstellungstechnisch einige Nachteile mit sich. Nicht nur der Materialaufwand ist durch das grössere Handgriffvolumen grösser; durch die grössere Masse wird auch die Einspritz- und Kühlzeit massiv erhöht und dadurch der Spritzgiessprozess verlängert (höhere Standzeit). Zudem neigen solche Handgriffteile mit einem relativ grossen Querschnitt zu einer Lunkerbildung (d.h. Bildung von Lufteinschlüssen), die bei Handgriffen aus einem transparenten Material sichtbar sind und die ästhetische Wirkung der Zahnbürste beeinträchtigen.

Der vorliegenden Erfindung liegt die Aufgabe zugrunde, ein Verfahren der eingangs genannten Art vorzuschlagen, das bei Herstellung einer Zahnbürste mit einem im Querschnitt grossen, massiven Handgriff kurze Spritzintervalle gewährleistet.

Diese Aufgabe wird erfindungsgemäss durch ein Verfahren mit den Merkmalen des Anspruches 1 gelöst.

Die Erfindung wird im Folgenden anhand der Zeichnung näher erläutert.

In der Zeichnung sind drei Varianten des erfindungsgemässes Verfahren dargestellt und im Folgenden näher beschrieben.

Es zeigen rein schematisch:
- Fig. 1 bis 3: eine erste Verfahrensvariante in drei Schritten;
- Fig. 4: in Seitenansicht und teilweise im Schnitt eine Zahnbürste hergestellt nach den Verfahrensschritten gemäss Fig. 1 bis 3;
- Fig. 5: in Draufsicht einen Teil einer Spritzgussform für die erste Verfahrensvariante;
- Fig. 6 und 7: eine zweite Verfahrensvariante in zwei Schritten;
- Fig. 8: in Seitenansicht und teilweise im Schnitt eine Zahnbürste hergestellt nach den Verfahrensschritten gemäss Fig.6 und 7;
- Fig. 9: in Draufsicht einen Teil einer Spritzgussform für die zweite Verfahrensvariante; und
- Fig. 10: in Draufsicht einen Teil einer Spritzgussform für eine dritte Verfahrensvariante.

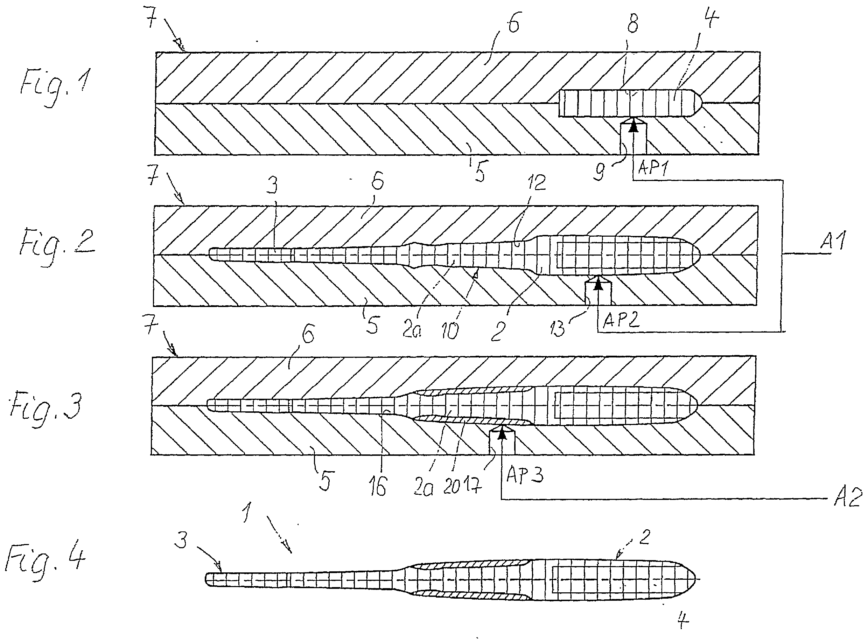

Zur Herstellung einer aus Fig. 4 ersichtlichen Zahnbürste 1, deren Handgriff 2 einen grösseren Querschnitt aufweist, als der zur Befestigung von Borsten bzw. Borstenbüscheln vorgesehene vordere Kopfteil 3, wird in einem ersten, in Fig. 1 dargestellten Schritt zuerst ein Innenteil 4 des Handgriffes 2 angefertigt. Zu diesem Zweck wird eine erste Portion der für den Handgriff 2 - und gegebenenfalls auch für den Kopfteil 3 - vorgesehenen ersten Materialkomponente in eine zwischen zwei Teilen 5, 6 einer Spritzgussform 7 gebildete erste Kavität 8 gespritzt. Der erste Anspritzpunkt für die von einem ersten Aggregat A1 zugeführte erste Materialkomponenete ist in Fig. 1 mit AP1 bezeichnet, der dafür vorgesehene Einspritzkanal bzw. Einspritzdüse mit 9.

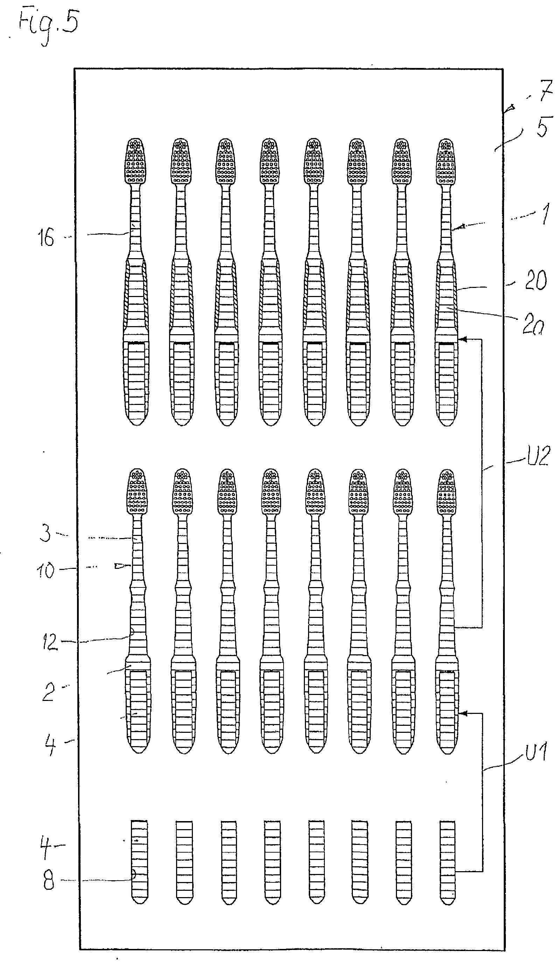

Wie aus Fig. 5 ersichtlich ist die Spritzgussform 7 für die Herstellung von mehreren, gegebenenfalls acht Zahnbürsten 1 vorgesehen. Die im ersten Schritt nach Fig. 1 gespritzten Innenteile 4 werden nach teilweisem Auskühlen und Aushärten - sobald genügende Eigenstabilität erreicht ist - mittels eines in der Zeichnung nicht dargestellten allgemein bekannten Übergabesystems, beispielsweise einem sogenannten internen, am Spritzwerkzeug angeordneten Handlingsystem, einem externen rotativen oder linearen Handlingsystem oder Roboter, jeweils in eine zweite, aus Fig. 2 ersichtliche Kavität 12 umgelegt. Diese erste Umlegung ist in Fig. 5 mit einem Pfeil U1 symbolisch angedeutet.

Der Innenteil 4 kann in radialer Richtung vorstehende Abstütznoppen aufweisen - in der Fig. 1 nicht gezeigt - mittels welchen das Innenteil 4 sich an der Wand der zweiten Kavität 12 abstützt, um dort zentrisch gehalten zu sein.

In einem zweiten, in Fig. 2 dargestellten Schritt wird eine zweite, gegebenenfalls restliche Portion der ersten Materialkomponenete in die zweite Kavität 12 über einen Einspritzkanal bzw. eine Einspritzdüse 13 eingespritzt. Der zweite Anspritzpunkt AP2 für die erste Kunststoffkomponenete ist gegenüber dem ersten Anspritzpunkt AP1 - in Längsrichtung der herzustellenden Zahnbürste gesehen - versetzt. Die zweite Portion der ersten Materialkomponente kommt in einen direkten Kontakt mit der ersten Portion; beim dargestellten Ausführungsbeispiel wird der Innenteil 4 umspritzt, der Handgriff 2 erhält in seinem hinteren Bereich die gewünschte, massive Form, und es entsteht auch der im Querschnitt schmalere vordere Kopfteil 3. Somit wird ein Grundkörper der Zahnbürste 1 gebildet, der aus der ersten Materialkomponenete besteht, und in Fig. 2 und 5 mit 10 bezeichnet ist. Für die Einspritzung beider Portionen der ersten Materialkomponenete wird vorzugsweise nur ein Aggregat A1 verwendet, wie in Fig. 1 und 2 angedeutet. Allerdings könnten die beiden Portionen des gleichen Materials auch aus zwei verschiedenen Aggregaten eingespritzt werden, und beispielsweise unterschiedliche Farben aufweisen.

Bei der Verfahrensvariante nach Fig. 1 bis 5 wird schliesslich in einem dritten Schritt der Handgriff 2 in seinem vorderen Bereich zusätzlich mit einer weiteren Materialkomponenete, beispielsweise einem im Vergleich zu der ersten Materialkomponenete elastisch nachgiebigeren Material, z.B. einem thermoplastischen Elastomer (TPE), umspritzt. Zu diesem Zweck wird der aus der ersten Materialkomponenete bestehende Grundkörper 10 nach dem Auskühlen bzw. Aushärten der zweiten Portion in eine dritte Kavität 16 der Spritzgussform 7 umgelegt, wobei wiederum die in Fig. 5 mit Pfeil U2 angedeutete zweite Umlegung aller acht Grundkörper 10 mittels eines nicht dargestellten Saugwerkzeuges erfolgt.

Gemäss Fig. 3 wird in die dritte Kavität 16 von einem weiteren Aggregat A2 über einen Einspritzkanal bzw. eine Einspritzdüse 17 die zweite Materialkomponenete in einem dritten Anspritzpunkt AP3 eingespritzt, wobei ein vorderer Teil 2a (Fig. 2 und 3) des Handgriffes 2 umspritzt und somit eine Art Mantel über einen Teil der Handgrifflänge gebildet wird. Ein solcher Griffteil 20 kann beispielsweise zur weiteren Verbesserung der Griffigkeit der Zahnbürste 1 beitragen. Selbstverständlich ist es möglich, weitere Materialkomponenten in weiteren Kavitäten hinzuzufügen.

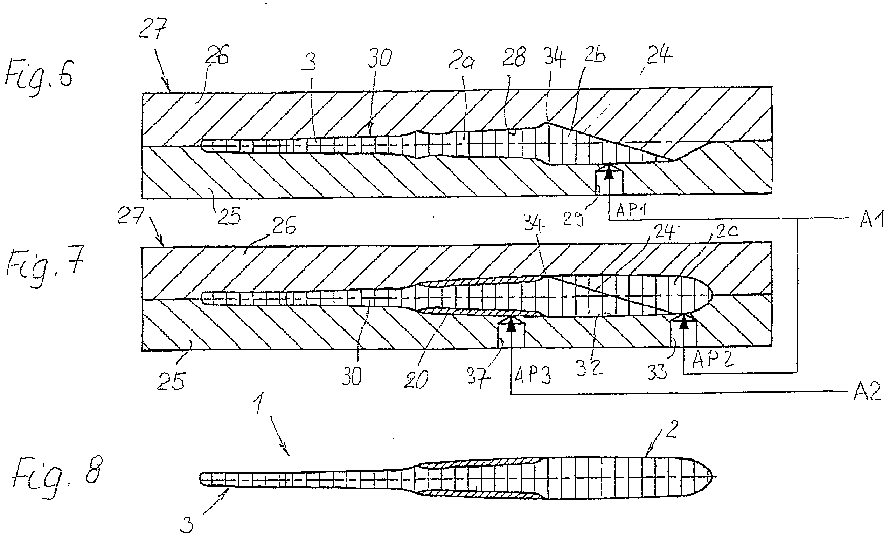

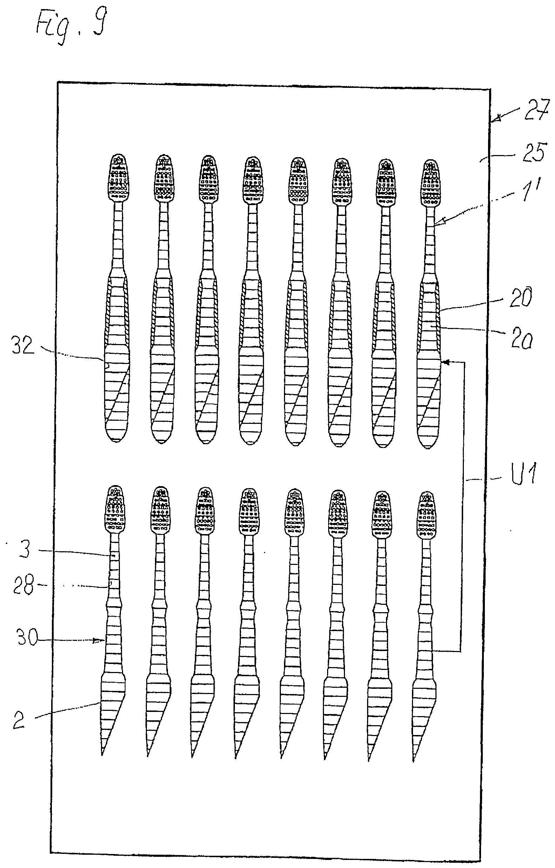

In Fig. 6, 7 und 9 ist eine weitere Verfahrensvariante zur Herstellung einer aus Fig. 8 ersichtlichen Zahnbürste 1' dargestellt, die wiederum einen vorderen Kopfteil 3 und einen diesem gegenüber im Querschnitt grösseren Handgriff 2 aufweist. Bei dieser Variante wird gemäss Fig. 6 in einem ersten Schritt der Kopfteil 3, ein vorderer Teil 2a des Handgriffes 2 sowie ein Teil 2b des im Querschnitt vergrösserten, hinteren Handgriffteils aus einer ersten Materialkomponenete gespritzt, die zusammen einen Grundkörper 30 der Zahnbürste 1' bilden. Die dafür vorgesehene, zwischen zwei Teilen 25, 26 einer Spritzgussform 27 gebildete erste Kavität ist in Fig. 6 mit 28 bezeichnet. Diese erste Kavität 28 ist so ausgebildet, dass der Teil 2b des Handgriffes 2 eine zur Längsrichtung der herzustellenden Zahnbürste 1' schräg verlaufende, obere Anspritzfläche 24 erhält; selbstverständlich könnte die Anspritzfläche 24 in eine andere Richtung verlaufen. In einem Anspritzpunkt AP1 wird über einen Einspritzkanal bzw. Einspritzdüse 29 eine erste Portion der ersten Materialkomponenete aus einem ersten Aggregat A1 in die erste Kavität 28 gespritzt. Wie aus Fig. 9 ersichtlich werden wiederum mehrere, gegebenenfalls acht Grundkörper 30 in einer Spritzgussform 27 hergestellt und nach teilweisem Auskühlen bzw. Aushärten mittels eines nicht dargestellten Übergabesystems in eine zweite, in Fig. 2 dargestellte Kavität 32 umgelegt. Diese Umlegung ist in Fig. 9 mit einem Pfeil U1 angedeutet.

In einem zweiten, in Fig. 7 dargestellten Schritt wird in die zweite Kavität 32 in einem hinteren zweiten Anspritzpunkt AP2, der hinter der Anspritzfläche 24 des sich in der Kavität 32 befindenden Grundkörpers 30 liegt, über einen Einspritzkanal bzw. eine Einspritzdüse 33 die zweite, restliche Portion der ersten Materialkomponenete eingespritzt - vorzugsweise aus dem gleichen Aggregat A1 wie die erste Portion. Auch hier könnte allerdings ein zusätzliches Aggregat für die zweite Portion zur Verfügung stehen. Durch die zweite, an die Anspritzfläche 24 des ausgekühlten Handgriffteiles 2b aufgespritzte Portion der ersten Materialkomponenete wird der restliche Teil 2c (Fig. 7) des Handgriffes 2 gebildet. Bei dieser Variante ist der Grundkörper 30 so ausgebildet, dass der für die Einspritzung dieser zweiten Portion (bzw. zur Bildung des restlichen Handgriff-Teiles 2c) vorgesehene Raum der zweiten Kavität 32 durch eine Umfangsfläche 34 des eingelegten Grundkörpers 30, die sich am Übergang zwischen dem vorderen Teil 2a und dem mit der Anspritzfläche 24 versehenen Teil 2b des Handgriffes 2 befindet, von einem für die Einspritzung einer zweiten, den vorderen Handgriffteil 2a umgebenden zweiten Materialkomponente vorgesehenen Raum der zweiten Kavität 32 getrennt ist. Somit kann gleichzeitig mit der Einspritzung der zweiten, restlichen Portion der ersten Materialkomponenete auch die Einspritzung der zweiten Materialkomponenete stattfinden, und zwar von einem weiteren Aggregat A2, in einem dritten Anspritzpunkt AP3, über einen in die zweite Kavität 32 mündenden Einspritzkanal (bzw. Eispritzdüse) 37. Auch hier wird dabei der Handgriff 2 zur Verbesserung der Griffigkeit mit dem beispielsweise aus einer elastisch nachgiebigeren Materialkomponente bestehenden Griffteil 20 ausgestattet. Falls notwendig, könnte die Einspritzung der ersten und zweiten Materialkomponente sequentiell erfolgen.

Bei der zweiten Verfahrensvariante nach Fig. 6, 7 und 9 sind demnach (im Gegensatz zu der ersten Variante nach Fig. 1 bis 3 und 5) für jede Zahnbürste 1' nur zwei Kavitäten 28, 32 notwendig, und es bedarf nur einer einzigen Umlegung U1.

Sowohl bei der ersten als auch bei der zweiten Verfahrensvariante wird durch die Aufteilung des Spritzgiessens vom im Querschnitt verdickten Handgriff 2 in zwei Arbeitsgänge, d. h. durch Spritzgiessen des gleichen Materials in zwei Portionen, die Einspritz- und die Kühlzeit wesentlich verkürzt, d. h. es werden kürzere Spritzintervalle ermöglicht, und zusätzlich wird die Bildung von Lunkern vermindert. Der letztgenannte Vorteil ist besonders bei transparenten oder transluzenten Handgriffen von Bedeutung. Die Trennlinien bzw. bei transparentem Material die Trennflächen zwischen den in den einzelnen Portionen gespritzten Handgriffteilen sind kaum sichtbar. Selbstverständlich könnten diese Handgriffteile (und die dazu benötigte Kavitäten) in ihrer Form auch anders ausgestaltet sein, als bei den Ausführungsbeispielen nach Fig. 1 bis 5 und 6 bis 9 dargestellt und beschrieben. Es wäre auch durchaus möglich, den im Querschnitt verdickten Handgriff in mehr als zwei Portionen zu spritzen, und dabei für jede weitere Portion eine zusätzliche Kavität vorzusehen.

Anhand der Fig. 1 bis 5 und 6 bis 9 wurde jeweils die Herstellung einer Zweikomponenten-Zahnbürste 1 bzw. 1' beschrieben. Selbstverständlich könnte auch eine Einkomponenten-Zahnbürste, d.h aus einer einzigen Materialkomponente bestehende Zahnbürste erfindungsgemäss in zwei oder mehreren Portionen gespritzt werden.

Eine Zweikomponenten-Zahnbürste könnte auch durchaus anders ausgestaltet sein als in Fig. 4 oder 8 dargestellt. Beispielsweise könnte der Kopfteil 3 aus einer anderen Materialkomponente bestehen, als der Handgriff 2. In diesem Fall könnte die zur Herstellung des gegenüber dem Kopfteil 3 verdickten Handgriffes 2 vorgesehene Materialkomponente mit Vorteil in zwei etwa gleich grossen Portionen gespritzt werden.

Bei einer Mehrkomponenten-Zahnbürste können aber auch mehrere Materialkomponenten erfindungsgemäss in zwei oder mehrere Portionen, die sequentiell gespritzt werden, aufgeteilt werden. Pro Komponente, welche aufgeteilt wird, ist natürlich mit einer zusätzlichen Kavität pro Portion zu rechnen.

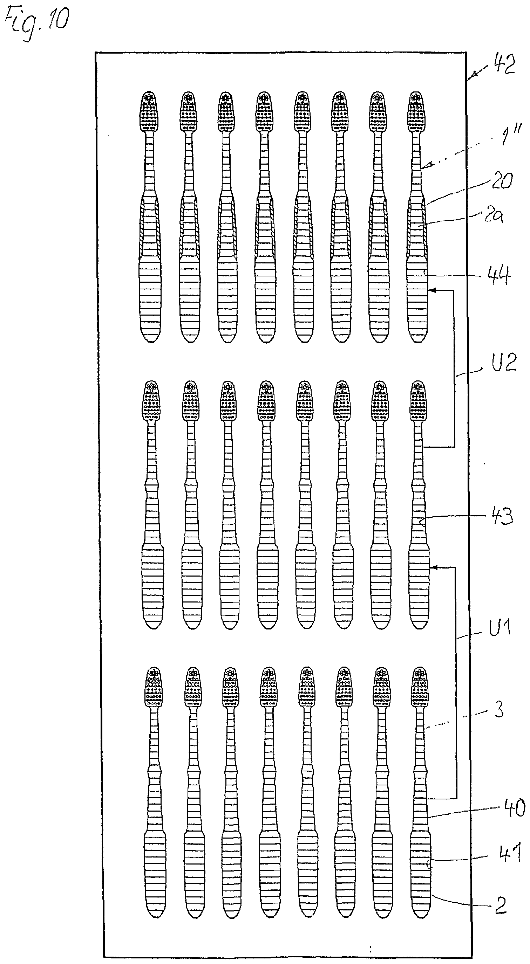

Eine weitere Verfahrensvariante zur Herstellung einer Zahnbürste, gegebenenfalls wiederum einer Zweikomponenten-Zahnbürste 1", ist in Fig. 10 angedeutet. In einem ersten Schritt wird ein Grundkörper 40 dieser Zahnbürste 1", der einen Kopfteil 3 sowie einen im Querschnitt vergrösserten Handgriff 2 aufweist, durch Spritzgiessen einer ersten Materialkomponente in eine erste Kavität 41 einer Spritzgussform 42 hergestellt, wobei bei dieser Variante die erste Materialkomponente vollständig in die erste Kavität 41 eingespritzt wird. Danach wird - sobald genügende Eigenstabilität nach teilweisem Auskühlen und Aushärten erreicht ist - der Grundkörper 40 mittels eines nicht dargestellten Saugwerkzeuges in eine Kühlkavität 43 umgelegt, was in Fig. 10 mit einem Pfeil U1 bezeichnet ist. In der Kühlkavität 43, die mit keinem Anspritzpunkt bzw. keinem Einspritzkanal ausgestattet ist, erfolgt eine wieitere Auskühlung und Aushärtung des Grundkörpers 40, insbesondere dessen massiven Handgriffes 2, bis keine Gefahr einer Verformung besteht, wenn in einem weiteren Schritt der Grundkörper 40 in eine weitere Kavität 44 umgelegt wird (vgl. Pfeil U2 in Fig. 10), in die eine zweite, beispielsweise elastisch nachgiebigere Materialkomponente zur Bildung des Griffteiles 20 gespritzt wird. Auch diese Variante ermöglicht durch die Umlegung U1 des Grundkörpers 40 in die Kühlkavität 43 kurze Spritzintervalle.

Fig. 10 zeigt wiederum als Beispiel eine zur gleichzeitigen Herstellung von 8 Zahnbürsten vorgesehene Spritzgussform 42. Selbstverständlich sind bei allen Varianten auch andere Formgrössen mit einer anderen Anzahl von Kavitäten denkbar (z.B. mit je 16 oder je 24 Kavitäten pro Arbeitsschritt).

Als geeignete Materialkomponenten können die verschiedensten Kunststoffe eingesetzt werden, wobei es sich um mindestens teilweise transparente Materialien handeln kann, wie beispielsweise Styrol-Acryl-Nitril, Polyester, Polystyrol, Polyamide, Polycarbonate, Polymethylmethacrylat oder andere. Als opake Materialien können als Beispiel Polypropylen, thermoplastische Elastomere oder Polyethylen genannt werden.

Hiermit ist auch ein Verfahren zur Herstellung einer Zahnbürste aus mindestens einer Materialkomponente offenbart, umfassend das Spritzgiessen der Materialkomponente in eine Kavität einer Spritzgussform, wobei entweder nur eine Portion der zur Bildung des Handgriffes vorgesehenen Materialkomponente in eine erste Kavität gespritzt wird und der restliche Teil dieser Materialkomponente in einer oder mehreren weiteren Portionen in jeweils eine weitere Kavität gespritzt und dabei in Verbindung mit mindestens einer der bereits gespritzten Portionen gebracht wird, oder die in die erste Kavität vollständig gespritzte Materialkomponente anschliessend in eine Kühlkavität zur Kühlung und Aushärtung umgelegt wird.

Auf dieses Verfahren beziehen sich die nachfolgenden bevorzugten Ausführungsformen.

Dabei kann vorzugsweise die zum Spritzgiessen in zwei oder mehreren Portionen vorgesehene Materialkomponente den einzelnen Kavitäten vom gleichen Aggregat zugeführt werden.

Weiter kann die zum Spritzgiessen in zwei oder mehreren Portionen vorgesehene Materialkomponente den einzelnen Kavitäten von verschiedenen Aggregaten zugeführt werden, wobei die einzelnen Portionen der zur Bildung des Handgriffes vorgesehenen Materialkomponente unterschiedliche Farben aufweisen können.

Es kann auch beim Spritzgiessen einer zweiten Portion der zur Bildung des Handgriffes vorgesehene Materialkomponente in eine zweite Kavität ein aus der ersten Portion dieser Materialkomponente gespritzter Teil umspritzt werden.

Im Weiteren kann beim Spritzgiessen einer zweiten Portion der zur Bildung des Handgriffes vorgesehenen Materialkomponente diese in eine zweite Kavität an eine Anspritzfläche eines aus der ersten Portion dieser Materialkomponente gespritzten Teiles aufgespritzt werden.

Es ist auch möglich beim Spritzgiessen einer zweiten Portion der zur Bildung des Handgriffes vorgesehenen Materialkomponente gleichzeitig eine zweite Materialkomponente in die zweite Kavität zu spritzen, wobei der für die zweite Portion der ersten Materialkomponente vorgesehene Teil der zweiten Kavität von dem für die zweite Materialkomponente vorgesehenen Teil dieser Kavität durch den in der ersten Portion bzw. in der ersten Kavität hergestellten Teil getrennt ist.

Weiter kann die zur die zur Bildung des Handgriffes vorgesehene Materialkomponente in zwei etwa gleich grossen Portionen gespritzt werden.

Es ist auch denkbar mindestens eine Portion der zur Bildung des Handgriffes vorgesehenen Materialkomponente wenigstens teilweise transparent oder transluzent auszubilden.

Es ist auch denkbar in einer Spritzgussform gleichzeitig eine Anzahl von Zahnbürsten in einer entsprechenden Anzahl von Kavitäten herzustellen.

## Patentansprüche

1. Verfahren zur Herstellung einer Zahnbürste mit einem Handgriff (2) und einem Kopfteil (3), wobei der Handgriff (2) gegenüber dem Kopfteil (3) im Querschnitt grösser ist, aus mindestens einer Materialkomponente, umfassend das Spritzgiessen der Materialkomponente in eine Kavität (8, 12, 16; 28, 32) einer Spritzgussform (7; 27), wobei nur eine Portion der zur Bildung des Handgriffes (2) vor gesehenen Materialkomponente in eine erste Kavität (8; 28) gespritzt wird und der restliche Teil dieser Materialkomponente in einer oder mehreren weiteren Portionen in jeweils eine weitere Kavität (12; 32) gespritzt und dabei in Verbindung mit mindestens einer der bereits gespritzten Portionen gebracht wird, wobei die zum Spritzgiessen in zwei oder mehreren Portionen vorgesehene Materialkomponente den einzelnen Kavitäten (8, 12, 16; 28, 32) von verschiedenen Aggregaten zugeführt wird und wobei die zur Bildung des Handgriffes (2) vorgesehene Materialkomponente in zwei etwa gleich grossen Portionen gespritzt wird.

2. Verfahren nach Anspruch 1, **dadurch gekennzeichnet, dass** die zum Spritzgiessen in zwei oder mehreren Portionen vorgesehene Materialkomponente den einzelnen Kavitäten (8, 12, 16; 28, 32) vom gleichen Aggregat (A1) zugeführt wird.

3. Verfahren nach einem der Ansprüche 1 bis 2, **dadurch gekennzeichnet, dass** beim Spritzgiessen einer zweiten Portion der zur Bildung des Handgriffes (2) vorgesehenen Materialkomponente in eine zweite Kavität (12) ein aus der ersten Portion dieser Materialkomponente gespritzter Teil (4) umspritzt wird.

4. Verfahren nach einem der Ansprüche 1 bis 2, **dadurch gekennzeichnet, dass** beim Spritzgiessen einer zweiten Portion der zur Bildung des Handgriffes (2) vorgesehenen Materialkomponente diese in eine zweite Kavität (32) an eine Anspritzfläche (24) eines aus der ersten Portion dieser Materialkomponente gespritzten Teiles (30) aufgespritzt wird.

5. Verfahren nach einem der Ansprüche 1 bis 4, **dadurch gekennzeichnet, dass** beim Spritzgiessen einer zweiten Portion der zur Bildung des Handgriffes (2) vorgesehenen Materialkomponente gleichzeitig eine zweite Materialkomponente in die zweite Kavität (32) gespritzt wird, wobei der für die zweite Portion der ersten Materialkomponente vorgesehene Teil der zweiten Kavität (32) von dem für die zweite Materialkomponente vorgesehenen Teil dieser Kavität (32) durch den in der ersten Portion bzw. in der ersten Kavität (28) hergestellten Teil (30) getrennt ist.

6. Verfahren nach einem der Ansprüche 1 bis 5, **dadurch gekennzeichnet, dass** mindestens eine Portion der zur Bildung des Handgriffes (2) vorgesehenen Materialkomponente wenigstens teilweise transparent oder transluzent ist.

7. Verfahren nach Anspruch 1, **dadurch gekennzeichnet, dass** die einzelnen Portionen der zur Bildung des Handgriffes (2) vorgesehenen Materialkomponente unterschiedliche Farbe aufweisen.

8. Verfahren nach einem der Ansprüche 1 bis 7, **dadurch gekennzeichnet, dass** in einer Spritzgussform (7; 27) gleichzeitig eine Anzahl von Zahnbürsten (1; 1') in einer entsprechenden Anzahl von Kavitäten (8, 12, 16; 28, 32) hergestellt wird.

9. Verfahren nach einem der Ansprüche 1 bis 8, **dadurch gekennzeichnet, dass** kürzere Spritzintervalle ermöglicht werden und zusätzlich die Bildung von Lunkern vermindert wird.

10. Verfahren nach einem der Ansprüche 1 bis 9, **dadurch gekennzeichnet, dass** geeignete Materialkomponenten Styrol-Acryl-Nitril, Polyester, Polystyrol, Polyamide, Polycarbonate, Polymethylmethacrylat, Polypropylen, thermoplastische Elastomere oder Polyethylen umfassen.

11. Zahnbürste hergestellt im Verfahren nach einem der Ansprüche 1 bis 10.

## Claims

1. Method for producing a toothbrush having a handle (2) and a head part (3), the handle (2) being larger in the cross section compared to the head part (3), from at least one material component, comprising injection moulding the material component into a cavity (8, 12, 16; 28, 32) of an injection mould (7; 27) and only a portion of the material component provided for forming the handle (2) being injected into a first cavity (8; 28) and the remaining part of said material component being injected in one or more further portions into in each case one further cavity (12; 32) and at the same time being brought into connection with at least one of the already injected portions, the material component provided in two or more portions for injection moulding being fed to the individual cavities (8, 12, 16; 28, 32) from different assemblies, and the material component provided to form the handle (2) being injected in two portions of approximately identical size.

2. Method according to Claim 1, **characterized in that** the material component provided in two or more portions for injection moulding is fed to the individual cavities (8, 12, 16; 28, 32) from the same assembly (A1) .

3. Method according to either of Claims 1 and 2, **characterized in that**, during the injection moulding of a second portion of the material component, provided for forming the handle (2), into a second cavity (12), a part (4) injected from the first portion of said material component is encapsulated.

4. Method according to either of Claims 1 and 2, **characterized in that**, during the injection moulding of a second portion of the material component provided for forming the handle (2), said material component is injected into a second cavity (32) onto an injection surface (24) of a part (30) injected from the first portion of said material component.

5. Method according to one of Claims 1 to 4, **characterized in that** during the injection-moulding of a second portion of the material component provided for forming the handle (2), a second material component is simultaneously injected into the second cavity (32), that part of the second cavity (32) which is provided for the second portion of the first material component being separated from that part of this cavity (32) which is provided for the second material component by the part (30) produced in the first portion or in the first cavity (28).

6. Method according to one of Claims 1 to 5, **characterized in that** at least one portion of the material component provided for forming the handle (2) is at least partially transparent or translucent.

7. Method according to Claim 1, **characterized in that** the individual portions of the material component provided for forming the handle (2) have different colours.

8. Method according to one of Claims 1 to 7, **characterized in that** a number of toothbrushes (1; 1') are produced simultaneously in an injection mould (7; 27) in a corresponding number of cavities (8, 12, 16; 28, 32).

9. Method according to one of Claims 1 to 8, **characterized in that** shorter injection intervals are allowed and additionally the formation of shrinkage cavities is reduced.

10. Method according to one of Claims 1 to 9, **characterized in that** suitable material components include styrene-acrylonitrile, polyester, polystyrene, polyamides, polycarbonates, polymethyl methacrylate, polypropylene, thermoplastic elastomers or polyethylene.

11. Toothbrush produced by a method according to one of Claims 1 to 10.

## Revendications

1. Procédé de fabrication d'une brosse à dents ayant un manche (2) et une partie de tête (3), le manche (2) étant plus grand en section transversale par rapport à la partie de tête (3), à partir d'au moins un composant de matériau, comprenant le moulage par injection du composant de matériau dans une cavité (8, 12, 16, 28, 32) d'un moule de moulage par injection (7 ; 27), seule une portion du composant de matériau prévu pour former le manche (2) étant pulvérisée dans une première cavité (8 ; 28) et la partie restante dudit composant de matériau étant pulvérisée dans une ou plusieurs autres portions dans à chaque fois une autre cavité (12 ; 32) et en l'occurrence étant amenée en liaison avec au moins une des portions déjà pulvérisées, le composant de matériau prévu pour le moulage par injection en deux ou plusieurs portions étant acheminé aux cavités individuelles (8, 12, 16 ; 28, 32) par des agrégats différents et le composant de matériau prévu pour former le manche (2) étant pulvérisé dans deux portions de taille approximativement identique.

2. Procédé selon la revendication 1, **caractérisé en ce que** le composant de matériau prévu pour le moulage par injection en deux ou plusieurs portions est acheminé aux cavités individuelles (8, 12, 16 ; 28, 32) par le même agrégat (A1).

3. Procédé selon l'une quelconque des revendications 1 et 2, **caractérisé en ce que** lors du moulage par injection d'une deuxième portion du composant de matériau prévu pour former le manche (2) dans une deuxième cavité (12), une partie (4) pulvérisée à partir de la première portion de ce composant de matériau est surmoulée.

4. Procédé selon l'une quelconque des revendications 1 et 2, **caractérisé en ce que** lors du moulage par injection d'une deuxième portion du composant de matériau prévu pour former le manche (2), celle-ci est pulvérisée dans une deuxième cavité (32) sur une surface de pulvérisation (24) d'une partie (30) pulvérisée à partir de la première portion de ce composant de matériau.

5. Procédé selon l'une quelconque des revendications 1 à 4, **caractérisé en ce que**, lors du moulage par injection d'une deuxième portion du composant de matériau prévu pour former le manche (2), un deuxième composant de matériau est simultanément pulvérisé dans la deuxième cavité (32), la partie de la deuxième cavité (32) prévue pour la deuxième portion du premier composant de matériau étant séparée de la partie de cette cavité (32) prévue pour le deuxième composant de matériau par la partie (30) fabriquée dans la première portion respectivement dans la première cavité (28).

6. Procédé selon l'une quelconque des revendications 1 à 5, **caractérisé en ce qu'**au moins une portion du composant de matériau prévu pour former le manche (2) est au moins en partie transparente ou translucide.

7. Procédé selon la revendication 1, **caractérisé en ce que** les portions individuelles du composant de matériau prévu pour former le manche (2) présentent des couleurs différentes.

8. Procédé selon l'une quelconque des revendications 1 à 7, **caractérisé en ce que** dans un moule de moulage par injection (7 ; 27) est fabriqué simultanément un certain nombre de brosses à dents (1 ; 1') dans un nombre correspondant de cavités (8, 12, 16, 28, 32).

9. Procédé selon l'une quelconque des revendications 1 à 8, **caractérisé en ce que** des intervalles de pulvérisation plus courts sont possibles et de plus la formation de creux est réduite.

10. Procédé selon l'une quelconque des revendications 1 à 9, **caractérisé en ce que** des composants de matériau appropriés comprennent le styrène-acrylonitrile, le polyester, le polystyrène, des polyamides, des polycarbonates, du polyméthylméthacrylate, du polypropylène, des élastomères thermoplastiques ou du polyéthylène.

11. Brosse à dents fabriquée par un procédé selon l'une quelconque des revendications 1 à 10.
